# EUROPEAN PATENT APPLICATION

(11) **EP 1 249 912 A1**
(43) Date of publication of application: **16.10.2002**
(21) Application number: 01870081.5
(22) Date of filing: 13.04.2001
(51) Int. Cl.: H02G 3/06, F16L 3/26

(54) **Cable-trough joint**

(71) Applicant: Vergokan, 9700 Oudenaarde (BE)
(72) Inventor: Ludwig, Verlé, 9660 Brakel (BE)
(74) Representative: Luys, Marie-José A.H.

(57) **Abstract**

Cable trough comprising at least first (10) and second elements (20), the first element (10) comprising a first base plate (11) and the second element (20) comprising a second base plate (21), the first element having a first open end (13) which is connectable to a second open end (23) of the second element (20), the first element (10) further comprising a first top plate (12) which is fixed to the first base plate (11) and the second element (20) further comprising a second top plate (22) which is fixed to the second base plate (21), the first base plate (11) protruding from the first top plate (12) by a given distance (D) at the first open end (13) of the first element (10) and the second top plate (22) protruding from the second base plate (21) by substantially the same given distance (D) at the second open end (23) of the second element (20), the protruding parts of the first base plate (11) and the second top plate (22) being provided with means (14,24) for simultaneously fixing the second top plate (22) to the first base plate (11) and to a carrier (30) onto which the first and second elements are to be mounted.

## Description

The present invention relates to a cable trough according to the preamble of the first claim.

A cable trough is for example known from FR-A-2 680 206. The cable trough known from FR-A-2 680 206 comprises a set of elements which are connectable to each other to form a passageway for containing cables. Each element comprises a U-shaped plate of which one end is provided with a plurality of extension lugs and the other end is provided with a corresponding plurality of slideways. One element is connectable to another element by inserting the extension lugs of the one into the slideways of the other. The lugs and slideways are provided with holes in which a bolt can be inserted for fixing the lugs to the slideways.

The cable trough described in FR-A-2 680 206 however has the disadvantage that, in order to connect one element to the other, the extension lugs of one element have to be inserted into the slideways of the other. This is a rather complex connection, as all the lugs have to be inserted into the corresponding slideways at the same time.

It is an object of the invention to provide a cable trough of which the elements are connectable in a simpler way.

This object is achieved according to the invention with the cable support system having the technical features of the characterising part of the first claim.

The elements of the cable trough according to the invention each comprise a base plate and a top plate which are fixed to each other and define a passageway for containing cables. A first-element has a first open end which is connectable to a second open end of a second element. At the first open end of the first element, the first base plate protrudes from the first top plate by a given distance D. At the second open end of the second element, the second top plate protrudes from the second base plate by substantially the same given distance D. In this way, the open ends are connectable by placing the protruding part of the second top plate over the protruding part of the first base plate. As a result, two elements of the cable trough of the invention can be connected to each other in a simpler way than in the prior art, as no extension lugs have to be inserted in passageways. Furthermore, this leads to a simpler construction of the elements, as it can be avoided that parts have to be cut from the plates or that the plates have to be bent in order to provide the extension lugs and passageways. As the top plate of the one element is fixed to the base plate of the other element, this can also lead to a stronger connection of the elements of the cable trough.

The protruding parts of the second top plate and the first base plate are provided with means for simultaneously fixing them to each other and to a carrier onto which the cable trough is to be mounted, such as for example a wall, a ceiling or a floor of a building. In this way it is achieved that the elements of the cable trough are fixed to each other and to the carrier by means of the same fixing means. As a result, the use of additional fixing means for fixing the elements to the carrier, such as for example a separate fixing element, can be avoided. In this way, the mounting of the cable trough on the carrier can be carried out in a single fixing step.

The fixing means for simultaneously fixing the second top plate to the first base plate and to the carrier preferably comprise holes in the second top plate and the first base plate which are provided to receive screws. The fixing means may however also comprise any other fixing means known to the person skilled in the art.

In a preferred embodiment of the cable trough according to the invention, each of the elements has an oblong shape with base and top plates of substantially the same length, the base plate being longitudinally shifted with respect to the top plate over the given distance D. This has the advantage that for constructing the elements, the base and top plates can be cut to substantially the same length and fixed together while they are longitudinally shifted over the distance D.

The elements of the cable trough of the invention are preferably constructed in metal. This has the advantage that, as the top plate of one element is fixed to and thus contacts the base plate of the next element, the elements form an equipotential connection, so that the cable trough is usable as an earth conductor. The elements of the cable trough may however also be constructed in a plastic material or in any other material deemed suitable by the person skilled in the art.

The invention will be further elucidated by means of the following description and the appended drawings.

Figures 1-3 show perspective views of a preferred embodiment of the cable trough according to the invention.

The cable trough shown in figures 1-3 comprises a first element 10, shown in figure 1, and a second element 20, shown in figure 2. In figure 3 it is shown how the first and second elements 10, 20 are connected and fixed.

The first element 10 comprises a first base plate 11 and a first top plate 12. The first top and base plates 11, 12 are fixed to each other and define a passageway for containing cables. At a first open end 13 of the first element 10, the first base plate 11 protrudes from the first top plate 12 by a given distance D.

The second element 20 comprises a second base plate 21 and a second top plate 22. The second top and base plates 21, 22 are fixed to each other and define a passageway for containing cables. At a second open end 23 of the second element 20, the second top plate 22 protrudes from the second base plate 21 by substantially the same distance D as mentioned with respect to the first element 10.

The base plates 11, 21 of the first and second elements 10, 20 are preferably substantially flat. The top plates 12, 22 preferably have a U-shaped profile with outstanding flanges 16, 26, by means of which they are fixed to the respective base plates 11, 21.

The fixing of the base 11, 21 and top plates 12, 22 can be done by welding, by means of rivets or bolts, or in any other way known to the person skilled in the art. The base 11, 21 and top plates 12, 22 are preferably constructed in metal so as to provide an equipotential connection, but may also be constructed in a plastic material or in any other material known to the person skilled in the art.

The first base plate 11 and the second top plate 22 are provided with holes 14, 24 for receiving screws 15. These screws 15 are longer than the thickness of the base 11, 21 and top plates 12, 22, so that they protrude from the bottom of the cable through when they are inserted in the holes 14, 24. In this way, the screws can simultaneously fix the second top plate 22 to the first base plate 11 and to a carrier 30 onto which the first and second elements 10, 20 are mounted.

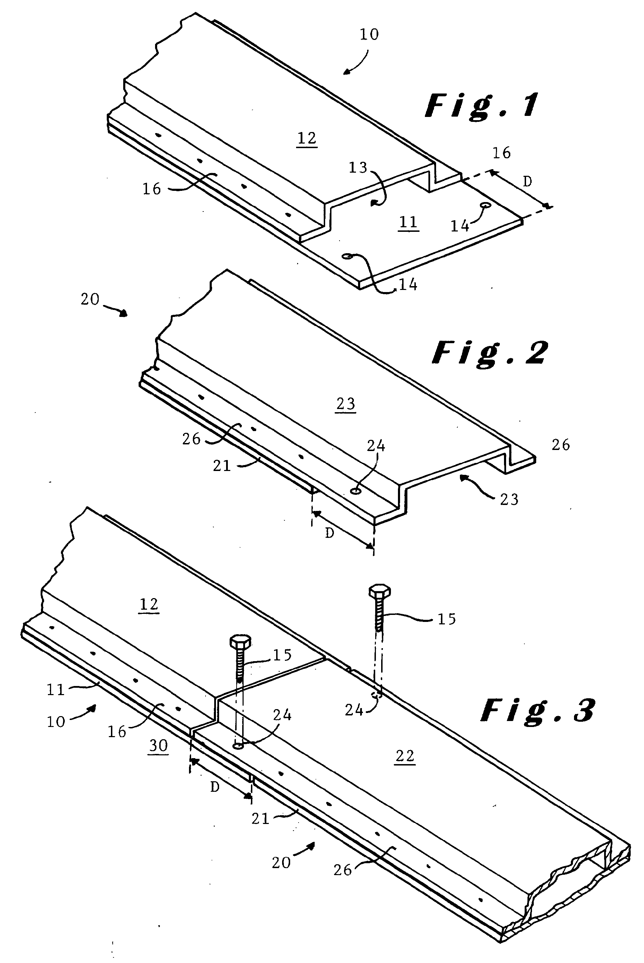

Preferably, the first and second elements 10, 20 have an oblong shape with base 11, 21 and top plates 12, 22 which have substantially the same length. In this preferred embodiment, the top plate 12, 22 is fixed to the base plate 11, 21 while it is longitudinally shifted over the given distance (D). As a result, the elements 10, 20 each have a first open end 13 as shown in figure 1 and a second open end 23 as shown in figure 2. The first and second elements 10, 20 may however also have a bent shape, a T-shape, or any other shape known to the person skilled in the art.

Fixing the first element 10 to the second element 20 and mounting the elements 10, 20 on the carrier 30 is carried out as shown in figure 3. First, the protruding part of the second top plate 22 of the second element 20 is placed over the protruding part of the first base plate 11 of the first element 10. The second element 20 is pushed towards the first element 10 until the edges of the first base plate 11 and the second base plate 21 and also the edges of the first top plate 12 and the second top plate 22 substantially contact each other. Then, screws 15 are inserted through the holes 14, 24 which are provided in the second top plate 22 and the first base plate 11 and are screwed into the carrier 30. In this way, the first and second elements 10, 20 are simultaneously fixed to each other and to the carrier 30. This has the advantage that the fixing of the two elements 10, 20 to each other and to the carrier 30 can be carried out in a single fixing step.

## Claims

1. Cable through comprising at least first (10) and second elements (20), the first element (10) comprising a first base plate (11) and the second element (20) comprising a second base plate (21), the first element having a first open end (13) which is connectable to a second open end (23) of the second element (20), **characterised in that** the first element (10) further comprises a first top plate (12) which is fixed to the first base plate (11) and the second element (20) further comprises a second top plate (22) which is fixed to the second base plate (21), the first base plate (11) protruding from the first top plate (12) by a given distance (D) at the first open end (13) of the first element (10) and the second top plate (22) protruding from the second base plate (21) by substantially the same given distance (D) at the second open end (23) of the second element (20), the protruding parts of the first base plate (11) and the second top plate (22) being provided with means (14, 24) for simultaneously fixing the second top plate (22) to the first base plate (11) and to a carrier (30) onto which the first and second elements are to be mounted.

2. Cable trough according to claim 1, **characterised in that** the fixing means comprise holes (14, 24) in the first base plate (11) and the second top plate (22) which are provided to receive screws (15).

3. Cable trough according to claim 1 or 2, **characterised in that** the base plates (11, 21) are substantially flat and that the top plates (12, 22) have a U-shaped profile with outstanding flanges (16, 26), the top plates (12, 22) being fixed to the base plates (11, 21) by means of the flanges (16, 26).

4. Cable trough according to any one of the claims 1-3, **characterised in that** the first (10) and second elements (20) have an oblong shape and that for each element (10, 20), the base (11, 21) and top plates (12, 22) have substantially the same length and the base plate (11, 21) is longitudinally shifted with respect to the top plate. (12, 22) over the given distance (D).

5. Cable trough according to any one of the previous claims, **characterised in that** the elements (10, 20) are constructed in metal.

## Amended claims

### Amended claims in accordance with Rule 86(2) EPC.

1. Cable through comprising at least first (10) and second elements (20), the first element (10) comprising a first base plate (11) and a first top plate (12) which is fixed to the first base plate (11), the second element (20) comprising a second base plate (21) and a second top plate (22) which is fixed to the second base plate (21), the first and second base and top plates (11, 12, 21, 22) being constructed in metal, the first element (10) having a first open end (13) which is connectable to a second open end (23) of the second element (20), the first base plate (11) protruding from the first top plate (12) by a given distance (D) at the first open end (13) of the first element (10) and the second top plate (22) protruding from the second base plate (21) by substantially the same given distance (D) at the second open end (23) of the second element (20), **characterised in that** the protruding parts of the first base plate (11) and the second top plate (22) are provided with means (14, 24) for simultaneously fixing the second top plate (22) to the first base plate (11) and to a carrier (30) onto which the first and second elements are to be mounted.

2. Cable trough according to claim 1, **characterised in that** the fixing means comprises holes (14, 24) in the first base plate (11) and the second top plate (22) which are provided to receive screws (15).

3. Cable trough according to claim 1 or 2, **characterised in that** the base plates (11, 21) are substantially flat and that the top plates (12, 22) have a U-shaped profile with outstanding flanges (16, 26), the top plates (12, 22) being fixed to the base plates (11, 21) by means of the flanges (16, 26).

4. Cable trough according to any one of the claims 1-3, **characterised in that** the first (10) and second elements (20) have an oblong shape and that for each element (10, 20), the base (11, 21) and top plates (12, 22) have substantially the same length and the base plate (11, 21) is longitudinally shifted with respect to the top plate (12, 22) over the given distance (D).
